# EUROPEAN PATENT APPLICATION

(11) **EP 4 819 428 A1**
(43) Date of publication of application: **07.10.2026**
(21) Application number: 25167824.9
(22) Date of filing: 01.04.2025
(51) Int. Cl.: H02J 3/18

(54) **POWER DEVICE**

(71) Applicant: GE Energy Power Conversion Technology Limited, Rugby, Warwickshire CV21 1BD (GB)
(72) Inventor: Permuy, Alfred, 91140 Villebon Sur Yvette (FR)
(74) Representative: Casalonga

(57) **Abstract**

The invention relates to a power device (1) comprising a first modular multilevel power converter (2), a second modular multilevel power converter (3), a DC link (4) connecting the first modular multilevel power converter (2) and the second modular multilevel power converter (3), a storage module (5) connected to the second modular multilevel power converter (3), and a control circuit (6). The first modular multilevel power converter (2) is intended to be connected to a main grid *G_{M}* powering an AC current and the second modular multilevel power converter (3) is intended to be connected to an auxiliary grid *G_{A}.* The control circuit (6) is configured to control the first modular multilevel power converter (2), the second modular multilevel power converter (3) and the storage module (5) to stabilize the current and the voltage delivered by the main grid *G_{M}* to reduce reactions in the main grid *G_{M}* and in the auxiliary grid *G_{A}.* The control circuit (6) is further configured to control the second modular multilevel power converter (3) and the storage module (5) to power the auxiliary grid *G_{A}.*

## Description

### FIELD OF THE INVENTION

The present invention relates to a power device.

The invention further relates to a system comprising such power device and a method for controlling such a power device.

### BACKGROUND

Generally, a grid supplying a plurality of loads comprises a device to regulate the voltage at the point of connection of each load to the grid by providing or absorbing reactive current.

Generally, the said load comprises a static synchronous compensator generally referred to as STATCOM.

The STATCOM is designed to regulate the voltage during a predetermined duration for a predetermined voltage drop.

The STATCOM comprises a plurality of cells each comprising energy storage devices to provide and absorb reactive power.

The energy storage devices are designed to compensate predetermined amount of reactive current.

Grid disturbances may appear and cause short voltage dips so that the grid does not supply the plurality of loads.

However, the energy devices of the STATCOM are generally not designed to supply short voltage dips of the grid.

It is therefore proposed to overcome wholly or partially this disadvantage.

### SUMMARY OF THE INVENTION

The invention relates to a power device comprising a first modular multilevel power converter, a second modular multilevel power converter, a DC link connecting the first modular multilevel power converter and the second modular multilevel power converter, a storage module connected to the second modular multilevel power converter, and a control circuit.

The first modular multilevel power converter is intended to be connected to a main grid powering an AC current and the second modular multilevel power converter is intended to be connected to an auxiliary grid. The control circuit is configured to control the first modular multilevel power converter, the second modular multilevel power converter and the storage module to stabilize the current and the voltage delivered by the grid to reduce reactions in the grid. The control circuit is further configured to control the second modular multilevel power converter and the storage module to power the auxiliary grid.

Advantageously, the storage module may comprise an auxiliary power converter and a power storage device connected to the auxiliary power converter. In this case, the control circuit may be further configured to control the auxiliary power converter to transfer electric energy between the power storage device and the second modular multilevel power converter.

Advantageously, the storage module may further comprise a transformer connecting the auxiliary power converter and the second modular multilevel power converter.

Advantageously, the power storage device may comprise at least one battery and/or at least one supercapacitor.

The invention further relates to a system comprising a main grid, at least one auxiliary grid and a power device according to any one of the above-described embodiments, and at least one AC load connected to the main grid. The first modular multilevel power converter is connected to the main grid, the second modular multilevel power converter is connected to the auxiliary grid, and the system is configured to power the at least one AC load.

Advantageously, the system may further comprise at least one AC load connected to the auxiliary grid.

The invention further relates to a method for controlling a power device according as defined above. In the power device, the first modular multilevel power converter is connected to a main grid powering an AC current and the second modular multilevel power converter is connected to an auxiliary grid. The method comprises controlling the first modular multilevel power converter, the second modular multilevel power converter and the storage module to stabilize the current and the voltage delivered by the grid to reduce reactions in the grid. The method further comprises controlling the second modular multilevel power converter and the storage module to power the auxiliary grid.

### BRIEF DESCRIPTION OF THE DRAWINGS

Other features and advantages of the present invention will become apparent from the following description given only by way of example and in view of the following drawings in which:
FIG. 1 illustrates an embodiment of a power device according to the invention;
FIG. 2 illustrates an embodiment of a storage module of a power device according to the invention; and
FIG. 3 illustrates an embodiment of a system comprising a power device according to the invention.

### DETAILED DESCRIPTION OF THE INVENTION

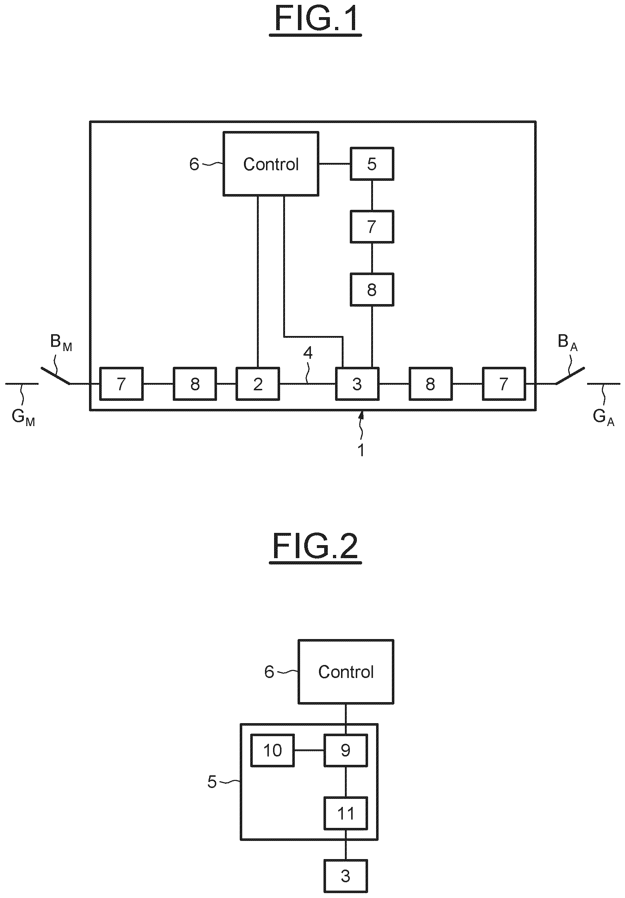

Figure 1 illustrates an example of a power device 1 comprising a first modular multilevel power converter 2 connected to a main grid *G_{M}* powering AC current through a main breaker *B_{M}* and a second modular multilevel power converter 3 connected to an auxiliary grid *G_{A}* through an auxiliary breaker *B_{A}.* The first modular multilevel power converter 2 and the second modular multilevel power converter 3 are connected by a DC link 4.

The grids *G_{A}* and *G_{M}* may be N-phase grids, N being an integer greater than zero. Preferably, the grids *G_{A}* and *G_{M}* have a different number of phases, for example the auxiliary grid *G_{A}* is a two-phase grid and the main grid *G_{M}* is a three-phase grid.

Therefore, in this case, the first modular multilevel power converter 2 may be a three-phase modular multilevel power converter and the second modular multilevel power converter 3 may be a two-phase modular multilevel power converter.

The second modular multilevel power converter 3 can be connected to a plurality of auxiliary grids but for the sake of clarity, it is assumed that the second modular multilevel power converter 3 is only connected to a single auxiliary grid *G_{A}.*

The power device 1 comprises a storage module 5 connected to the second modular multilevel power converter 3 and a control circuit 6.

The power device 1 further comprises current sensors 7 to measure a current flowing through the first modular multilevel power converter 2, the second modular multilevel power converter 3 and the storage module 5, and voltage sensors 8 to measure a voltage at terminals of the first modular multilevel power converter 2, the second modular multilevel power converter 3 and the storage module 5.

The sensors 7, 8 deliver the measurements to the control circuit 6.

Figure 2 illustrates an example of a storage module 5 comprising an auxiliary power converter 9 and a power storage device 10 connected to the auxiliary power converter 9.

The storage module 5 may further comprise a transformer 11 connecting the auxiliary power converter 9 and the second modular multilevel power converter 3. The transformer 11 may be a high frequency transformer.

The auxiliary grid *G_{A}* may have a greater frequency than the main grid *G_{M}.* In this case, the power device 1 is further configured to increase the frequency of the current.

The power storage device 10 may comprise at least one battery and/or at least one supercapacitor. As known in the field, supercapacitors have the advantage of accepting and delivering charge much faster than batteries. Furthermore, supercapacitors are known to tolerate many more charge and discharge cycles than typical batteries.

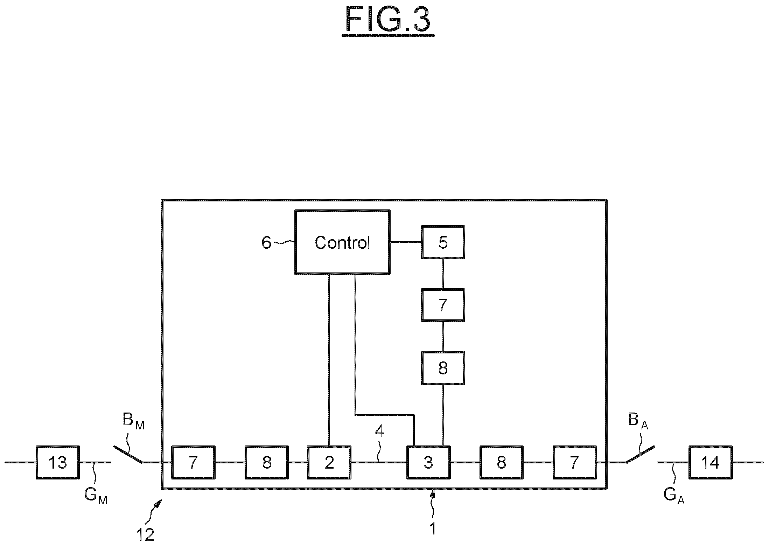

Figure 3 illustrates an example of a system comprising the power device 1, the main grid *G_{M}* and at least one auxiliary grid *G_{A}.* In this system 12, at least one AC load 13 is connected to the main grid *G_{M}*, the first modular multilevel power converter 2 being connected to the main grid *G_{M}*, the second modular multilevel power converter 3 being connected to the auxiliary grid *G_{A}*, the system 12 being configured to power the at least one AC load. The system 12 may further comprise at least one other AC load 14 connected to the at least one auxiliary grid *G_{A}.*

An example of a method to control the power device 1 is now disclosed.

The control circuit 6 controls the first modular multilevel power converter 2, the second modular multilevel power converter 3 and the storage module 5 to stabilize the current and the voltage delivered by the main grid *G_{M}* to reduce reactions in the main grid *G_{M}* and in the auxiliary grid *G_{A}.*

When a voltage drop of the main grid *G_{M}* is detected by the control circuit 6, the control circuit 6 controls the first modular multilevel power converter 2, the second modular multilevel power converter 3 and the storage module 5 so that the energy stored in the storage module 5 supplies the main grid *G_{M}.*

When the energy delivered by the main grid *G_{M}* is sufficient to supply loads connected to the said grid, the control circuit 6 controls the first modular multilevel power converter 2, the second modular multilevel power converter 3 and the storage module 5 to store energy in the storage module 5.

When at least one AC load 14 is connected to the auxiliary grid *G_{A}*, the control circuit 6 controls the second modular multilevel power converter 3 to power the auxiliary grid *G_{A}.* The second modular multilevel power converter 3 may be supplied by the DC link 4 and/or by the storage module 5.

When the second modular multilevel power converter 3 is supplied by energy stored in the storage module 5, the control circuit 6 further controls the auxiliary power converter 9 to transfer electric energy between the power storage device 10 and the second modular multilevel power converter 3.

## Claims

1. Power device (1) comprising:
- a first modular multilevel power converter (2),
- a second modular multilevel power converter (3),
- a DC link (4) connecting the first modular multilevel power converter (2) and the second modular multilevel power converter (3),
- a storage module (5) connected to the second modular multilevel power converter (3), and
- a control circuit (6),
wherein the first modular multilevel power converter (2) is intended to be connected to a main grid (*G_{M}*) powering an AC current and the second modular multilevel power converter (3) is intended to be connected to an auxiliary grid (*G_{A}*), and wherein the control circuit (6) is configured to:
- control the first modular multilevel power converter (2), the second modular multilevel power converter (3) and the storage module (5) to stabilize the current and the voltage delivered by the main grid (*G_{M}*) to reduce reactions in the main grid (*G_{M}*) and in the auxiliary grid (*G_{A}*), and
- control the second modular multilevel power converter (3) and the storage module (5) to power the auxiliary grid (*G_{A}*)*.*

2. Power device (1) according to claim 1, wherein the storage module (5) comprises an auxiliary power converter (9) and a power storage device (10) connected to the auxiliary power converter (9), the control circuit (6) being further configured to control the auxiliary power converter (9) to transfer electric energy between the power storage device (10) and the second modular multilevel power converter (3).

3. Power device (1) according to claim 2, wherein the storage module (5) further comprises a transformer (11) connecting the auxiliary power converter (9) and the second modular multilevel power converter (3).

4. Power device (1) according to any one of claims 1 to 3, wherein the power storage device (10) comprises at least one battery and/or at least one supercapacitor.

5. System (12) comprising a main grid (*G_{M}*), at least one auxiliary grid (*G_{A}*) and a power device (1) according to any one of claims 1 to 4, and at least one AC load (13) connected to the main grid (*G_{M}*), the first modular multilevel power converter (2) being connected to the main grid (*G_{M}*), the second modular multilevel power converter (3) being connected to the auxiliary grid (*G_{A}*), the system (12) being configured to power the at least one AC load (13).

6. System (12) according to claim 5, further comprising at least one other AC load (14) connected to the auxiliary grid (*G_{A}*)*.*

7. Method for controlling a power device (1) comprising:
- a first modular multilevel power converter (2),
- a second modular multilevel power converter (3),
- a DC link (4) connecting the first modular multilevel power converter (2) and the second modular multilevel power converter (3),
- a storage module (5) connected to the second modular multilevel power converter (3), and
- a control circuit (6),
wherein the first modular multilevel power converter (2) is connected to a main grid (*G_{M}*) powering an AC current and the second modular multilevel power converter (3) is connected to an auxiliary grid (*G_{A}*), the method comprising:
- controlling the first modular multilevel power converter (2), the second modular multilevel power converter (3) and the storage module (5) to stabilize the current and the voltage delivered by the main grid (*G_{M}*) to reduce reactions in the main grid (*G_{M}*) and in the auxiliary grid (*G_{A}*), and
- controlling the second modular multilevel power converter (3) and the storage module (5) to power the auxiliary grid (*G_{A}*)*.*

8. Method according to claim 7, wherein the storage module (5) comprises an auxiliary power converter (9) and a power storage device (10) connected to the auxiliary power converter (9), the method comprising controlling the auxiliary power converter (9) to transfer electric energy between the power storage device (10) and the second modular multilevel power converter (3).

9. Method according to claim 8, wherein the storage module (5) further comprises a transformer (11) connecting the auxiliary power converter (9) and the second modular multilevel power converter (3).

10. Method according to any one of claims 7 to 9, wherein the power storage device (10) comprises at least one battery or at least one supercapacitor.
